# EUROPEAN PATENT APPLICATION

(11) **EP 1 986 439 A2**
(43) Date of publication of application: **29.10.2008**
(21) Application number: 08154236.7
(22) Date of filing: 09.04.2008
(51) Int. Cl.: H04N 7/26

(54) **Efficient cache memory fetching for motion compensated video decoding**

(30) Priority: 23.04.2007 JP 2007112762
(71) Applicant: NEC Electronics Corporation, Kawasaki, Kanagawa 211-8668 (JP)
(72) Inventor: Matsubara, Katsushige c/o NEC Electronics Corporation, Kawasaki Kanagawa 211-8668 (JP)
(74) Representative: Betten & Resch

(57) **Abstract**

A method of a motion compensation, comprising specifying a reference region which is larger than a region of a macro block, based on a motion vector, specifying an object read region larger than the reference region, dividing the object read region into a plurality of divided object read regions; and responding to an identification information identified for each of the divided object read regions to request an external memory to transfer a data in the external memory into a buffer.

## Description

### BACKGROUND OF THE INVENTION

### 1. Field of the Invention

The present invention relates to a motion compensation technique and an apparatus, and more particularly to a technique for motion compensation executed in macro blocks upon decoding each compressed motion picture.

### 2. Description of Related Art

In recent years, there have been proposed various types of techniques, each of which compresses motion pictures to reduce the amount of information. Typically, those methods are, for example, MPEG techniques such as MPEG-4, H.264/MPEG-4, AVC (MPEG-4 Part 10 Advanced Video Coding), VC-1, etc.

In case of each of those techniques, motion compensation (MC: Motion Compensation) processing is executed to reduce the time redundancy of motion picture signals.

Japanese Laid Open Patent Application No. 2006-279330 discloses a method that predicts a reference region of a macro block to be decoded immediately after the current macro block that is being decoded upon making a motion compensation processing, reads the pixel data of a region that includes the predicted reference region and larger than the reference region from a main memory, then storing the read pixel data in a cache memory. This method predicts the reference region of a macro block to be decoded next while the current macro block is being decoded and stores the pixel data of the reference region in the cache memory. Thus, if the prediction is right, then the pixel data of the reference region can be read from the cache memory and used for an arithmetic operation of motion compensation upon decoding the macro block to be decoded next. As a result, the motion compensation processing can be executed faster. Furthermore, because the pixel data of a region that includes a predicted reference region and larger than the reference region is read from the main memory and stored in the cache memory, even upon wrong prediction, the deviation from the actual reference region might be canceled at a high possibility.

Furthermore, as described in Japanese Laid Open Patent Application No. 2003-296724, in case of motion compensation processing executed sequentially for each of macro blocks in the horizontal scanning direction (lateral direction), the pixel data of the reference region of the current macro block that is being decoded might possibly be assumed as the next address of the pixel data of the reference region of the macro block for which motion compensation has been finished just before. However, the start address of the pixel data of this reference region in the main memory is generated at random and the address offset is not uniform. Generally, the throughput performance of the main memory and the memory bus of the SDRAM (Synchronous Dynamic Random Access Memory), etc. is excellent in burst accesses than single accesses. The control unit and the bus protocol of the main memory are thus implemented so as to realize faster transfer of bursts. Consequently, upon reading pixel data of the reference region of the current macro block that is being decoded, the pixel data of the reference region of the next macro block to be decoded or part of the pixel data might possibly be read.

Under such circumstances, the patent document 2 proposes a method that reads even surplus pixel data upon reading the pixel data of the current reference region and stores all those data in a cache memory. According to this method, upon making a motion compensation processing for the next macro block, if some pixel data of the reference region of this macro block is already stored in the cache memory, this pixel data can be read from the cache memory. Therefore, the reference region's pixel data can be read faster, thereby it is possible to reduce the pixel data reading time (refer to [0050] to [0051 in 2003-296724).

As described above, either the pixel data of a region that includes the reference region of the current macro block that is being decoded and larger than the reference region or the pixel data of a region that includes a predicted reference region of the next macro block to be decoded immediately after the current macro block and larger than the reference region is stored in a cache memory. Upon executing a motion compensation processing for a compressed motion picture in macro blocks, if part of the pixel data of the reference region of the macro block to be decoded next is stored in a cache memory (cache hit), this part of the pixel data is output from the cache memory to improve the efficiency of the motion compensation processing.

Usually, data in a cache memory is managed in management units referred to as lines, each consisting of data collected up to a certain amount. One line consists of data and such attribute information of its address, flag, etc. In a cache memory, a line is specified with an entry address set in a lower-order bit of the line specific address and each line includes an upper-order bit of the line specific address and the upper-order bit is stored in a buffer referred to as a tag. And when a line of data is stored in the line, the line tag is set to denote that data is stored in the line.

The cache memory, upon receiving a data access request, specifies a possible line according to the entry address included in the access address and compares the tag of the specified line with the upper-order bit of the access address to detect a cache hit. Concretely, if the set tag matches with the upper-order bit of the access address, the cache memory regards it as a cache hit and outputs requested data from the line denoted by the tag.

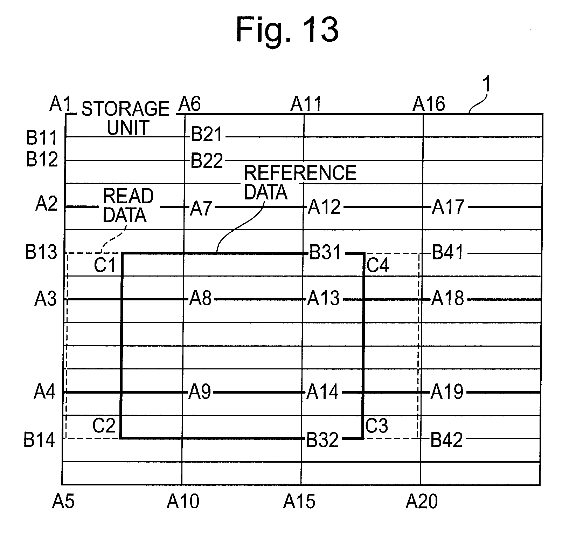

Next, there will be described a line size of an ordinary cache memory, a size of pixel data of a reference region (hereinafter, to be referred to as reference data) required for motion compensation processing, and a size of data read from a main memory (hereinafter, to be referred to as read data) with reference to Fig. 13.

Fig. 13 is an explanatory diagram of an ordinary cache memory 1. In Fig. 13, each rectangle drawn with a thick line and numbered like A1-A2-A7-A6, or A6-A7-A12-A11 denotes one line. The cache memory 1 is composed of plural such lines. The size of one line is represented with the number of bits of the power of 2.

Each small rectangle (e.g., B11-B12-B22-B21) enclosed by a thin line in each thick lined rectangle denotes data in one storage unit assumed when reading data from the main memory and storing the data in the cache memory. In the example shown in Fig. 13, one line has a data size equivalent to four storage units. This storage unit size is equivalent to, for example, the size (bit width) of the data transferred in each cycle of the clock signal by an internal bus of the LSI that decodes compressed motion pictures.

In Fig. 13, the rectangle formed with the C1-C2-C3-C4 dotted line denotes reference data used for object motion compensation. This reference data is read from the main memory and stored in a line corresponding to its address.

As described above, when the reference data is read from the main memory, the pixel data in a region that includes the object reference region and larger than the reference region is read. Consequently, when reading the reference data in the C1-C2-C3-C4 line rectangle, not only this reference data, but also the data in, for example, the B13-B14-B42-B41 dotted line rectangle is read (read data) and stored in the cache memory 1.

The ordinary cache memory, as described above, manages data in lines and when a line of data is stored in a line, the line tag is set. Consequently, as shown in Fig. 13, data is stored in a dotted line rectangle of B13-B14-B42-B41, but only the tag is set with respect to the line denoted by A8-A9-A14-A13. And because data is stored partially in each of lines denoted by A2-A3-A8-A7, as well as lines denoted by A1-A3-A8-A7, A7-A8-A13-A12, A12-A13-A18-A17, A3-A4-A9-A8, A13-A14-A19-A18, A4-A5-A10-A9, A9-A10-A15-A14, A14-A15-A20-A19, the tags of those lines are not set.

Consequently, upon decoding a macro block, even when part of the reference data used for the motion compensation of this micro block is stored in the rectangle denoted by B31-B32-B42-B41 in Fig. 13, the tag is not set for the line to which those data belong. Thus it is regarded as a cache miss and those data are read again from the main memory.

In order to improve the cache hit rate, it is conceivable to reduce the line size of the cache memory. If the line size of the cache memory is reduced, however, the tag capacity increases, thereby the control circuit of the cache memory is complicated and the circuit scale increases. This has been a problem. On the other hand, if the line size increases, then the cache hit rate is lowered, thereby the whole system processing efficiency is lowered.

### SUMMARY OF THE INVENTION

A motion compensation apparatus of an exemplary aspect of the present invention includes a buffer memory, a reading unit, an object read region specifying unit, an object read region dividing unit, and a control unit. The reading unit reads data from an external memory that stores reference images and stores the read data in the buffer memory. The object read region specifying unit specifies an object read region assumed upon reading the pixel data of a reference region from the external memory that holds its reference image that includes the reference region used for the motion compensation of a macro block and the object read region dividing unit divides the object read region into plural divided regions. The control unit instructs the reading unit to read the object read region specified by the object read region specifying unit and manages the data read by the reading unit and stored so far in the buffer memory with respect to each divided region. The control unit also instructs the reading unit to read pixel data from each divided region of which pixel data is not stored in the buffer memory among the divided regions of the currently specified object read region. The motion compensation apparatus described above may be replaced with any of the methods, units, and systems in the embodiment of the present invention.

According to the technique of the present invention, therefore, it is possible to suppress increasing of the circuit scale while improving the processing efficiency upon executing motion compensation for each compressed motion picture in macro blocks.

### BRIEF DESCRIPTION OF THE DRAWINGS

The above and other exemplary aspects, advantages and features of the present invention will be more apparent from the following description of certain exemplary embodiments taken in conjunction with the accompanying drawings, in which:
Fig. 1 is a block diagram of a decoder in an exemplary embodiment of the present invention;
Fig. 2 is a diagram for describing an external memory in the decoder shown in Fig. 1;
Fig. 3 is a diagram for showing how frames are stored in the external memory;
Fig. 4 is a diagram for describing the unit of accessing the external memory;
Fig. 5 is a diagram for showing data of a storage block stored in one column of the external memory;
Fig. 6 is a diagram for describing how addresses are assigned to the data in each storage block;
Fig. 7 is a diagram for showing how addresses are assigned to the data in one frame;
Fig. 8 is a block diagram of a motion compensation processor in the decoder shown in Fig. 1;
Fig. 9 is a diagram for showing a relationship between a reference region and an object read region;
Fig. 10 is a diagram for describing how an object read region is divided;
Fig. 11 is a flowchart of the processing by the motion compensation processor shown in Fig. 8;
Fig. 12 is a diagram for showing how data is stored and managed in a buffer memory of the motion compensation processor shown in Fig. 8; and
Fig. 13 is a diagram for describing problems that arise upon using the conventional cache memory for motion compensation processing.

### DETAILED DESCRIPTION OF THE EXEMPLARY EMBODIMENTS

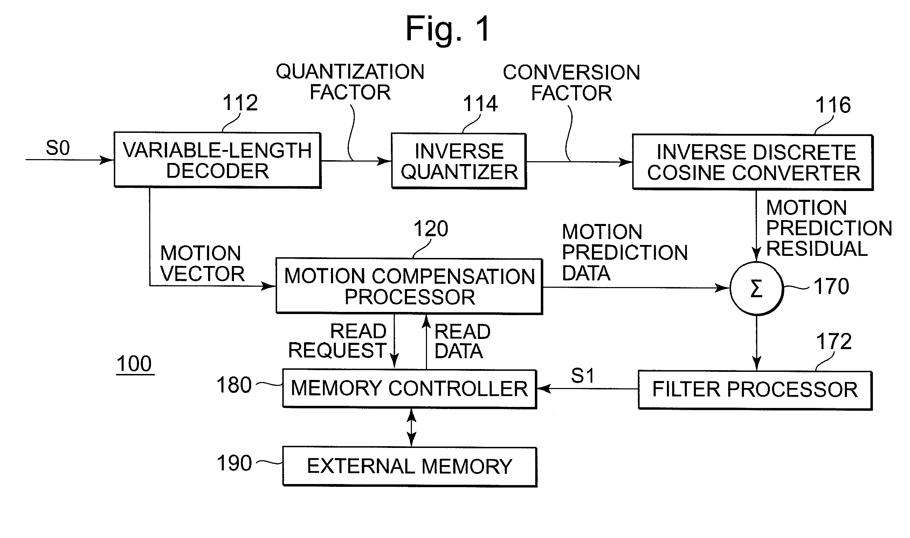

Fig. 1 shows a decoder 100 in the exemplary embodiment of the present invention. The decoder 100 conforms to the MPEG-4 standard and includes a variable-length decoder 112, an inverse quantizer 114, an inverse discrete cosine converter 116, a motion compensation processor 120, an adding unit 170, a filter processor 172, a memory controller 180, and an external memory 190. The decoder 100 decodes luminance and color difference contents of each motion picture. Hereunder, "data" will be used as "luminance content data" and hereinafter, there will be described only the luminance content. The color difference content is the same as the luminance content in processing sequence; only the size differs between those contents. Thus the same processing method can apply those contents.

The variable-length decoder 112 decodes variable-length codes with respect to the compressed motion picture S0 of the MPEG-4 to obtain a quantization factor and a motion vector. This processing is executed for each macro block in the horizontal scanning order.

The inverse quantizer 114 quantizes the quantization factor obtained by the variable-length decoder 112 inversely to obtain a conversion factor. The inverse discrete cosine converter 116 carries out discrete cosine conversion for the conversion factor obtained by the inverse quantizer 114 to obtain a motion prediction residual.

The motion compensation processor 120 carries out a motion compensation arithmetic operation for the reference data (the details will be described later) that is pixel data of a reference region denoted by the motion vector obtained by the variable-length decoder 112 to obtain motion prediction data.

The adding unit 170 adds up the motion prediction residual obtained by the inverse discrete cosine converter 116 and the motion prediction data obtained by the motion compensation processor 120 to obtain addition data.

The filter processor 172 filters the addition data obtained by the adding unit 170 to obtain decoded data (S1).

The memory controller 180 instructs the external memory to store the decoded data S 1 obtained by the filtering processor 172 and reads the data (read data) specified by a read request issued from the motion compensation processor 120 from the external memory 190 and outputs the read data to a cache memory (to be described later) of the motion compensation processor 120.

Before describing the decoder 100 in detail, there will be described here how decoded data is stored in the external memory and how the data is read from the external memory upon decoding a compressed motion picture with reference to an SDRAM used often as such an external memory.

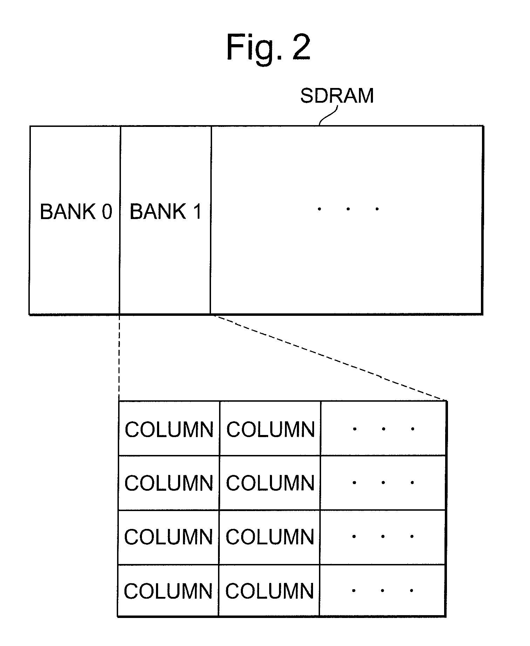

Fig. 2 shows a configuration of such an SDRAM. The SDRAM consists of plural banks and each bank consists of plural columns. One column has a capacity of 128 bytes, 256 bytes, 512 bytes, or so. As described above, because burst accessing is more effective than other accessing methods to access such an SDRAM, the control unit and the memory bus protocol of the SDRAM are implemented so as to realize faster burst transfer. In case of the transfer efficiency of such an SDRAM, it is well known that the transfer efficiency is not lowered even when the start position of a burst transfer is at random upon accessing the data in the same column and the transfer efficiency is not lowered even in consecutive accesses upon accessing different banks consecutively.

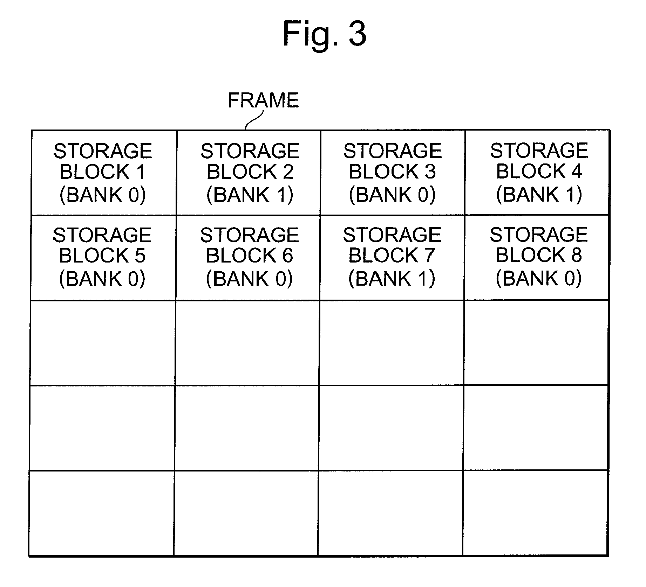

Under such circumstances, when a motion picture is to be stored in a frame buffer composed of an SDRAM, usually the picture is not divided into pixels sequentially in the horizontal scanning direction of the motion picture frame before it is stored therein. Instead, the picture frame is divided into plural rectangular blocks (hereinafter, to be referred to as storage blocks) and the data in one storage block is stored in one column and adjacent storage blocks are stored in different banks. Fig. 3 shows its image.

As shown in Fig. 3, one frame has plural storage blocks like storage block 1, storage block 2 and so on. The storage blocks and columns in the frame buffer are related to each other at a one-to-one correspondence. The data in each storage block is stored in its corresponding column. In Fig. 3, a bank number shown in parentheses denotes the storage block to be stored in the bank. Adjacent storage blocks are thus stored in different banks.

Each motion picture frame is stored in the frame buffer as shown in Fig. 3. When reading data from the frame buffer, the bank number, column number in the bank, and position in the column (lower address) are specified.

Furthermore, data is stored in and read from the frame buffer access by access (by an amount of data stored/read in one cycle), so that the size of data to be stored in each column becomes an integer multiple of the access unit.

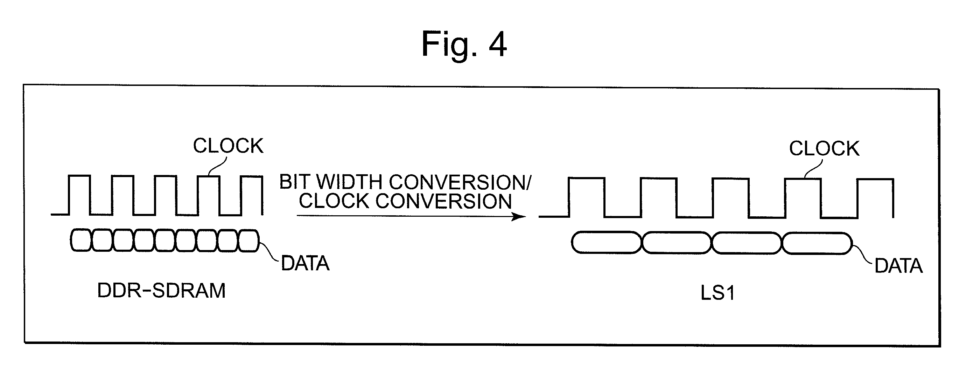

Next, there will be described the access unit assumed upon accessing the frame buffer. As described above, a burst transfer method is used to transfer data to/from an SDRAM and the burst transfer unit (bit width) is, for example, 8 bits, 16 bits, etc. And in recent years, the main stream of the SDRAM is DDR-SDRAM (Double-Data-Rate SDRAM). As shown on the left side in Fig. 4, the DDR-SDRAM memory bus protocol enables data exchanges synchronously with both rising and falling edges of the subject fast clock signal. It is difficult to employ this protocol for the LSI as is. Thus the LSI converts the bit width and the clock frequency as shown on the right side in Fig. 4 to enable data exchanges with the DDR-SDRAM and lowers the frequency of the clock signal and increases the bit width, thereby transferring data to the internal bus of the LSI synchronously only with the rising edge of the clock signal. Consequently, the unit of accessing from the LSI to the DDR-SDRAM becomes larger than the unit of burst transfer.

In other words, in case of the frame buffer composed of a DDR-SDRAM, a motion picture frame is stored in a column corresponding to each storage block and columns corresponding to their adjacent storage blocks respectively are in different banks. The unit of accessing the frame buffer is larger than the unit of the burst transfer of the SDRAM and each column stores data of which size is as large as the integer multiple of the access unit.

Next, there will be described the memory controller 180 and the external memory 190 of the decoder 100 in the exemplary embodiment shown in Fig. 1 by taking the above description into account.

The external memory 190 may be a frame buffer composed of a DDR-SDRAM. The filter processor 172 obtains decoded data S 1 and outputs the data S1 to the memory controller 180. The memory controller 180 stores the decoded data S1 in the external memory 190.

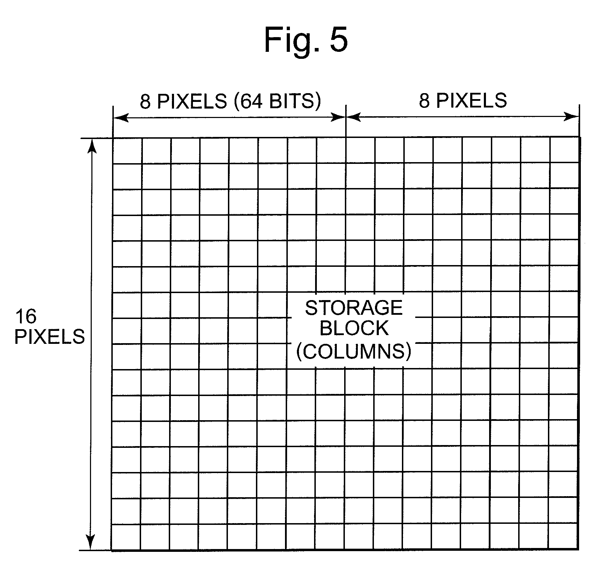

In this embodiment, it is premised that each column in the external memory 190 is 16x16 byes (256 bytes) in size and the unit of accessing from the memory controller 180 to the external memory 190 is 64 bits (8 bytes). And one pixel of the decoded data S 1 is 8 bits and the unit of one access to the external memory 190 is consecutive 8 pixel data in the horizontal scanning direction. In this embodiment, therefore, the decoded data S 1 is divided into storage blocks (16 x 16 pixels) as shown in Fig. 5, then stored in the external memory 190. And one storage block data is stored in one column in the external memory 190.

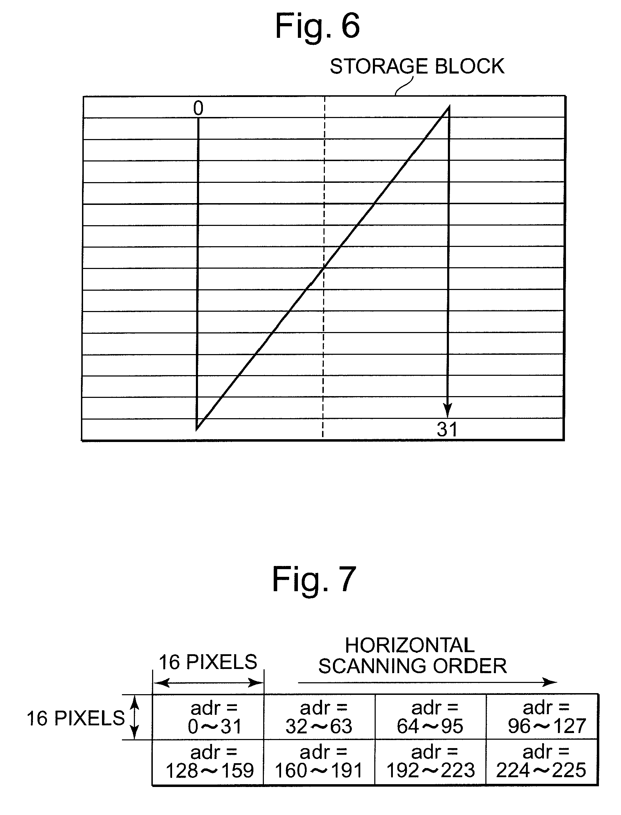

Furthermore, in this embodiment, addresses are assigned to the storage blocks in units of 8 pixels respectively in the horizontal direction. Fig. 6 shows an example of an address assignment order. As shown with arrows in Fig. 6, addresses are assigned in storage blocks respectively in the order of the top left 8 pixels (shown with 0 in Fig. 3) -> bottom left 8 pixels -> top right 8 pixels -> bottom right 8 pixels (shown with 31 in Fig. 3).

Such address assignment is made for each storage block in the frame from the top left storage block in the horizontal scanning order. Fig. 7 shows an example of address assignment for a frame consisting of 4 x 4 storage blocks. As shown in Fig. 7, 32 addresses are assigned to the storage blocks respectively from the top left storage block in the horizontal scanning order. The upper-order bit of each of those addresses can specify a bank number and denotes the position of a storage block in the frame. As shown clearly in Fig. 7, address assignment begins at the top left 8 pixels of the frame and it is continued sequentially in the horizontal scanning order. Thus the position of a storage block in the frame becomes a relative position with respect to the start (top left end) of the frame and the address of the top left 8 pixels is assumed as the base address of each of other 8-pixel data.

Next, there will be described the motion compensation processor 120 of the decoder 100.

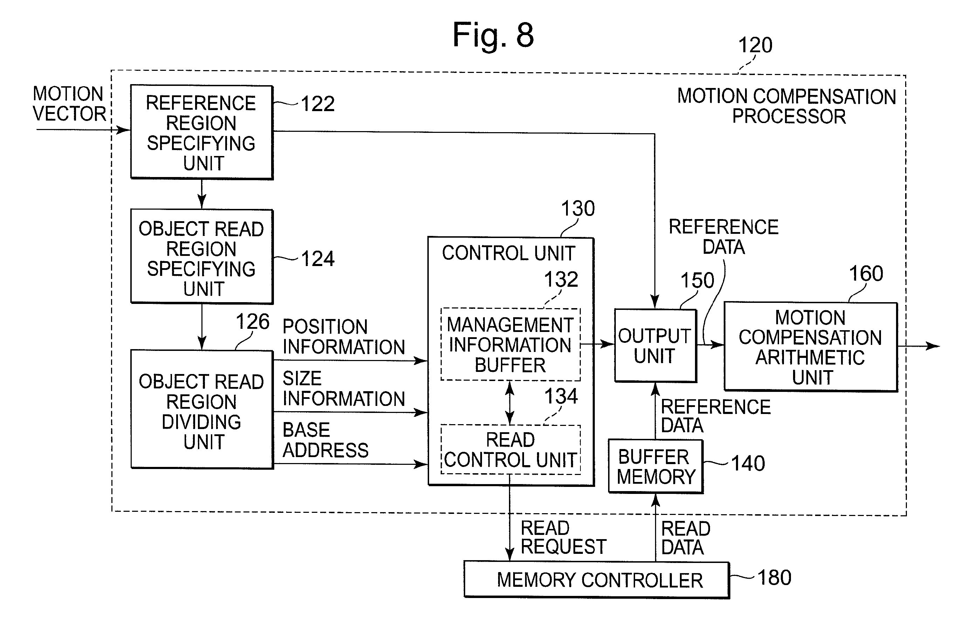

Fig. 8 shows a block diagram of the motion compensation processor 120. The motion compensation processor 120 makes motion compensation for each macro block in the horizontal scanning order. The motion compensation processor 120 includes a reference region specifying unit 122, an object read region specifying unit 124, an object read region dividing unit 126, a control unit, a buffer memory 140, an output unit, and a motion compensation arithmetic unit 160. In Fig. 8, each element described as a functional block for various processing can be composed of a CPU, a memory, and other LSIs in a hardware configuration. In a software configuration, each of those functional blocks can be realized with a program or the like loaded in the memory. Consequently, it is understood by those skilled in the art that those functional blocks can be realized just by hardware items, just by software items, or by a combination of those hardware and software items; they are not realized only with hardware items, software items, or a combination of hardware and software items.

The reference region specifying unit 122 inputs a motion vector of the current macro block obtained by the variable-length decoder 112 and being decoded and specifies a region denoted by this motion vector as a reference region. The macro block size and the reference region size differ among standards. In this embodiment, the macro block size is 8 x 8 pixels and the reference region size is 13 x 13 pixels.

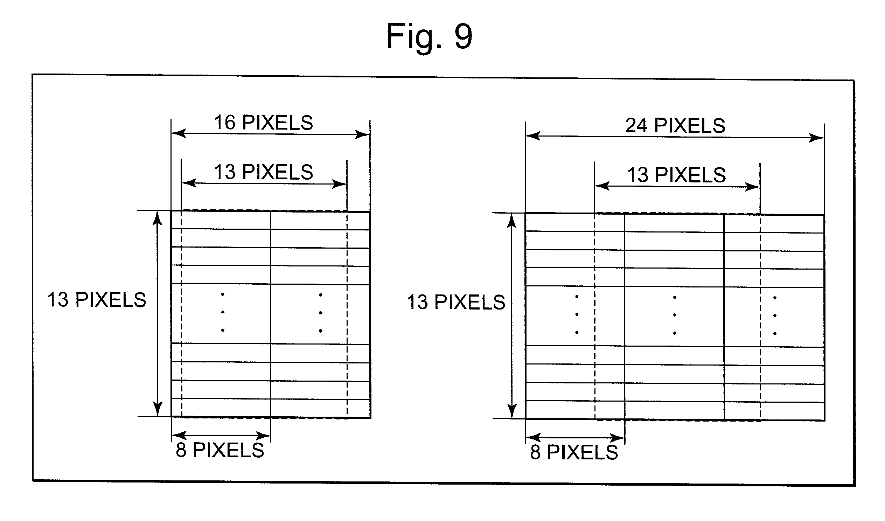

Each reference region exists on a decoded frame (hereinafter, to be referred to as a reference frame) and its data is stored in the external memory 190 that functions as a frame buffer. The object read region specifying unit 124 specifies a region (object read region) in the external memory 190, from which its data is to be read according to the reference region specified by the reference region specifying unit 122. Hereunder, there will be described a relationship between a reference region and an object read region with reference to Fig. 9.

As described above, because the external memory 190 is accessed in units of 8 pixels in the horizontal scanning direction, in order to read data of a reference region consisting of 13 x 13 pixels from the external memory 190, the data comes to be read from an object read region that includes this reference region and consists of 16 x 13 pixels or 13 x 24 pixels. In Fig. 9, the reference region is a region denoted by a dotted line and consists of 13 x 13 pixels. The left and right portions in Fig. 9 are regions consisting of 16 x 13 pixels and 24 x 13 pixels and to be read respectively. The object read region specifying unit 124 specifies an object read region consisting of 16 x 13 pixels or 24 x 13 pixels as shown in Fig. 9 according to the reference region consisting of 13 x 13 pixels and specified by the reference region specifying unit 122.

In other words, because reference region data is read so as to be used for the motion compensation of the current macro block that is being decoded, the region actually to be read (object read region) includes this reference region and is larger than the reference region.

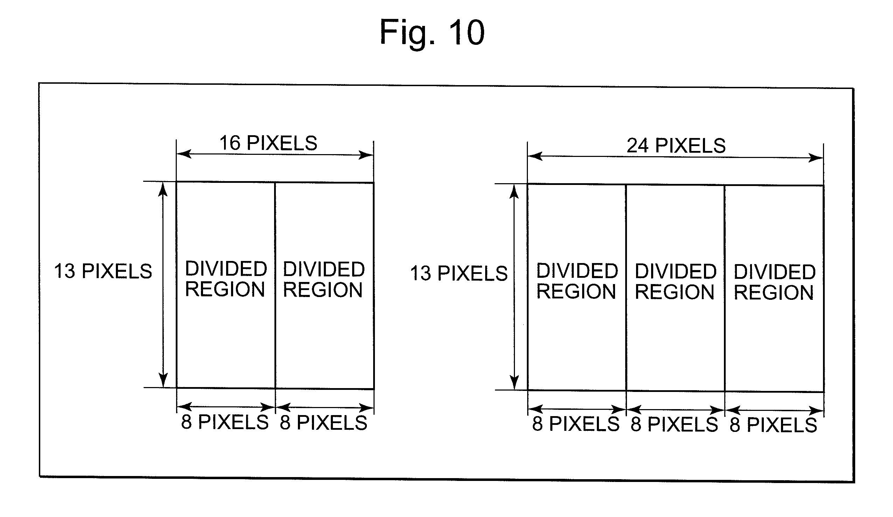

The object read region dividing unit 126 divides an object read region specified by the object read region specifying unit 124 into plural divided regions. In this embodiment, the object read region dividing unit 126 divides an object read region into divided regions in units of 8 pixels, which is the same size as that of the unit of accessing in the horizontal direction. As shown in Fig. 10, the object read region consisting of 16 x 13 pixels is divided into two divided regions consisting of 8 x 13 pixels respectively and the object read region consisting of 24 x 13 pixels is divided into three divided regions consisting of 8 x 13 pixels respectively.

The object read region dividing unit 126 divides each object read region such way and outputs the size, position, and base address of each divided region to the control unit 130 as object read information. The size information is that of each divided region (8 x 13 pixels in the example shown in Fig. 10). The position information denotes a position of a divided region on its reference frame with reference to the top left corner of the reference frame. The base address is the start address of the reference frame. In this embodiment, the base address consists of 8 pixels denoting the top left corner of the reference frame.

The control unit 130 includes a management information buffer 132 and a read control unit 134. The read control unit 134 controls reading of data from the external memory 190 according to the object read information obtained from the object read region dividing unit 126 and the management information stored in the management information buffer 132. The management information may be object read information of which pixel data is stored in the buffer memory 140.

Here, there will be described first a case in which management information is not stored in the management information buffer 132. In this case, the current macro block that is being decoded means a macro block to be decoded first among the macro blocks in the subject frame, that is, the macro block positioned at the top left corner of the frame.

The read control unit 134 outputs a read request to the memory controller 180 with respect to each divided region denoted by the object read information obtained from the object read region dividing unit 126 and stores the object read information of each of those divided regions in the management information buffer 132 as management information.

The memory controller 180 functions as a reading unit. Upon receiving a read request from the read control unit 134, the memory controller 180 reads pixel data of an object divided region from the external memory 190 and outputs the read pixel data to the buffer memory 140. The memory controller 180 includes a function that converts the bit width and frequency of data output from the external memory 190.

The buffer memory 140 stores the data read by the memory controller 180. This read data is pixel data of an object read region consisting of 16 x 13 pixels or 24 x 13 pixels, which includes the data of a reference region specified by the reference region specifying unit 122.

The output unit 150 checks whether or not the buffer memory 140 stores the pixel data (reference data) of the subject reference region consisting of 13 x 13 pixels, specified by the reference region specifying unit 122, according to the management information stored in the management information buffer 132 of the control unit 130. At this time, the management information buffer 132 also stores the management information of each divided region stored in the cache memory. Therefore, the output unit 150 reads the reference data from the buffer memory 140 and outputs the read data to the motion compensation arithmetic unit 160.

The motion compensation arithmetic unit 160 executes a motion compensation arithmetic operation with use of the reference data obtained from the output unit 150, thereby obtaining motion prediction data of the current macro block that is being decoded.

Next, there will be described a case in which management information is stored in the management information buffer 132. As described above clearly, the management information stored in the management information buffer 132 means management information of each divided region, which is read from the external memory 190 and stored in the buffer memory 140.

Here, there will be described a relationship between the object read region of the current macro block that is being decoded and the object read region of the macro block to be decoded next. The reference region of a macro block is denoted by its motion vector, but adjacent macro blocks often have the same motion vector at a high possibility. Even when adjacent macro blocks have different motion vectors, the difference between the reference regions denoted by the two motion vectors often do not become the integer number of pixels. Furthermore, in this embodiment, a region larger than the subject reference region is specified as an object read region, so that the object read regions of adjacent macro blocks are mostly put one upon another at a high possibility.

If a macro block to be decoded immediately after the currently decoding macro block and the currently decoded macro block are positioned in the same horizontal scanning line, the macro block to be decoded next comes to be adjacent to the currently decoding macro block in the horizontal direction. Furthermore, if the macro block to be decoded immediately after the currently decoding macro block is positioned in the horizontal scanning line just under that of the currently decoding macro block, decoding is already completed for each macro block positioned in the horizontal scanning line of the currently decoding macro block. Consequently, the macro block to be decoded next comes to be adjacent to each of the already decoded macro blocks positioned in the horizontal scanning line of the currently decoding macro block.

In other words, the data read from the external memory 190 and stored in the buffer memory 140 so as to be used for a motion compensation arithmetic operation often includes at least part of the read data of the macro block to be decoded immediately after the currently decoding macro block.

If the management information buffer 132 stores management information, then the read control unit 134 compares the object read information obtained from the object read region dividing unit 126 with the management information stored in the management information buffer 132. The read control unit 134 then outputs a read request to the memory controller 180 only with respect to each divided region of which management information is not stored in the management information buffer 132 among the divided regions denoted by the object read information obtained from the object read region dividing unit 126. The read control unit 134 also stores the object read information of each divided region to which the read request is issued in the management information buffer 132 as management information.

The pixel data of each divided region of which management information is stored in the management information buffer 132 among the divided regions denoted by the object read information obtained from the object read region dividing unit 126 is already read from the external memory 190 and stored in the buffer memory so as to be used for the motion compensation arithmetic operation of the previously decoded macro block.

The processing to be executed in the memory controller 180, the buffer memory 140, the output unit 150, and the motion compensation arithmetic unit 160 after that are the same as those for the first macro block described above.

In this embodiment, the buffer memory 140 may be an FIFO (First In First Out) memory. The management information buffer 132 may also be an FIFO memory. The buffer memory 140 can store management information equivalent to all the divided regions. The management information of each divided region of which pixel data is stored in the buffer memory 140 is stored in the management information buffer 132 and when the buffer memory 140 discards the pixel data of a divided region, the management information buffer 132 also discards the management information of the divided region.

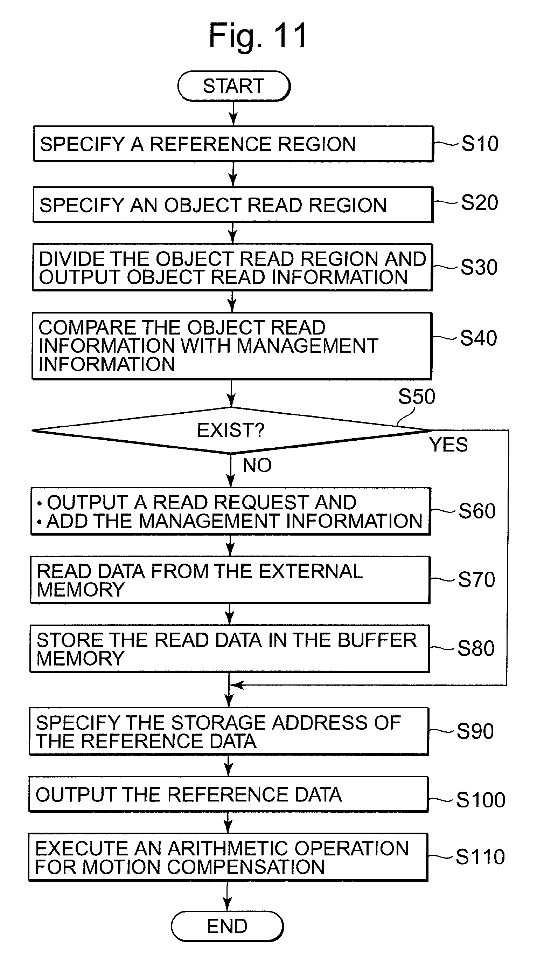

Fig. 11 shows a flowchart of the processing by the motion compensation processor 120 shown in Fig. 8. The reference region specifying unit 122 specifies a reference region consisting of 13 x 13 pixels, denoted by the motion vector of the currently decoding macro block (S10) and the object read region specifying unit 124 specifies an object read region consisting of 16 x 13 pixels or 24 x 13 pixels, which includes the reference region according to the reference region specified by the reference region specifying unit 122 (S20). The object read region dividing unit 126 divides the object read region specified by the object read region specifying unit 124 into divided regions consisting of 8 x 13 pixels respectively and outputs the base address of the reference frame that includes those divided regions, as well as the position and size of each divided region in the reference frame as the object read information to the control unit 130 (S30).

The read control unit 134 of the control unit 130 compares the object read information of each divided region, output from the object read region dividing unit 126 with the management information stored in the management information buffer 132 with respect to each divided region and outputs a read request to the memory controller 180 only with respect to each divided region of which management information is not stored in the management information buffer 132 among all the divided regions denoted by the object read information (S40, S50: No, S60). Furthermore, in step S60, the read control unit 134 outputs the object read information of each divided region to which the read request is issued as management information so as to be stored in the management information buffer 132.

The memory controller 180 reads pixel data of each subject divided region from the external memory 190 according to the read request received from the read control unit 134 and stores the read data in the buffer memory 140 (S70, S80).

In other words, among the divided regions of an object read region of the currently decoding macro block, the pixel data of each divided region of which pixel data is not stored in the buffer memory 140 is read from the external memory 190 and stored in the buffer memory 140. And among the divided regions of the object read region of the currently decoding macro block, the pixel data of each divided region of which pixel data is already stored in the buffer memory 140 is not read from the external memory 190.

Consequently, the pixel, data of each object read region that includes the reference region of the currently decoding macro block is stored in the buffer memory 140 and their management information is stored in the management information buffer 132. As a result, the output unit 150 refers to the management information buffer 132 to know that the pixel data of the subject read region is stored in the buffer memory 140. The output unit 150 then specifies the address of the pixel data of the reference region consisting of 13 x 13 pixels, specified by the reference region specifying unit 122 and reads the reference data according to the specified address, then outputs the read data to the motion compensation arithmetic unit 160 (S90, S100).

The motion compensation arithmetic unit 160 executes a motion compensation arithmetic operation with use of the reference data obtained from the output unit 150 to obtain motion prediction data and outputs this motion prediction data to the adding unit 170 (S110). This completes the motion compensation processing for the currently decoding macro block.

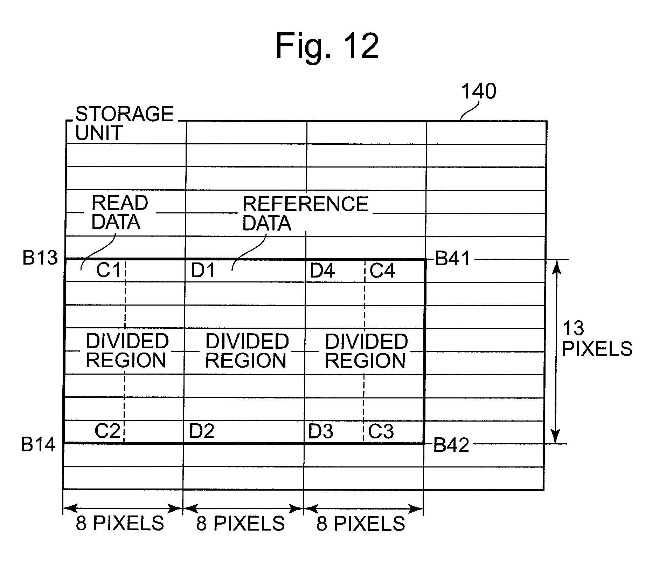

Fig. 12 shows how pixel data of each reference region and each object read region are stored in the buffer memory 140 of the decoder 100, as well as how to manage those pixel data therein. In order to make it easier to compare with the conventional cache memory 1 shown in Fig. 13, the same reference numerals will be used for the frames denoting the pixel data of each reference region and each object read region.

As shown in Fig. 12, pixel data is stored in storage units in the buffer memory 140. This storage unit means a bit width of the data transferred on the internal bus of the motion compensation processor 120 and it is the same as the unit of accessing to the external memory 190. In this embodiment, this storage unit is 8 64-bit pixels. In the example shown in Fig. 12, the pixel data of each reference region consists of 13 x 13 pixels as denoted with a dotted line frame of C1-C2-C3-C4. The pixel data of each object read region consists of 24 x 13 pixels as denoted with a line frame of B13-B14-B42-B41.

The control unit 130 manages data stored in the buffer memory 140 with respect to each divided region includes 8 x 13 pixels, obtained from each object read region. As shown in Fig. 12, the pixel data of an object read region denoted with a line frame of B13-B14-B42-B41 is divided into three divided regions denoted with line frames B13-B14-D2-D1, D1-D2-D3-D4, and D4-D3-B42-B41. The management information buffer 132 of the control unit 130 holds management information with respect to each of these divided regions.

Each conventional cache memory manages data in lines with use of the addresses of which data are stored in an external memory. The line size is represented with the number of bits of the power of 2 and the data stored in a line cannot be used until the line becomes full of data. Consequently, as shown in the example in Fig. 13, even when the data denoted with the line frame of B31-B32-B42-B41 is stored in the cache memory, the line tag is not set at this time. It is thus regarded as a cache miss and those data are read again from the main memory.

On the other hand, in this embodiment, the data stored in the buffer memory 140 is managed with respect to each divided region and the position of each divided region is used as management information, thereby pixel data obtained from any position (address) in the subject reference frame can be managed. Consequently, the management information buffer 132 comes to hold the management information of each divided region of which pixel data is stored in the buffer memory 140 and the buffer memory 140 can output the information, thereby improving the efficiency of the motion compensation processing.

Furthermore, in this embodiment, the size of each divided region is also used as management information. Consequently, data can be managed by the size of the divided region and the reference data to be read from the external memory and supplied for the motion compensation arithmetic operation can be minimized. Furthermore, because the capacity of the buffer memory 140 can be managed in accordance with the sizes of the divided regions, read data can be justified to the right/left and stored so as to use the buffer memory efficiently even when the size of the reference region/object read region is variable and/or the size of the reference data is not equivalent to the number of bits of the power of 2. In other words, when using any stored data again, the reuse can achieve the same effect as that of the conventional cache memory with a smaller buffer memory capacity.

Furthermore, if a motion picture conforms to any of the H.264 and VC-1 standards, the micro block size might become as small as 4 x 4 pixels, 4 x 8 pixels, or so and the reference region size and the object read region size might also become small. And also in such a case, it is possible to manage the data stored in the buffer memory with respect to each divided region obtained from each object read region in accordance with the reference region size, so that the technique of the present invention will be able to reuse the data stored in the buffer memory more effectively.

This completes the description of the present invention with reference to the embodiment described above. However, the embodiment of the present invention is just an example and it is to be understood that modifications will be apparent to those skilled in the art without departing from the spirit of the invention.

For example, in the decoder 100 employed in the above embodiment, the size of each divided region is 8 x 13 pixels. In case of any of the H.264 and the VC-1 standards, however, the macro block size is variable. Therefore, the reference region size and the object read region size are also variable. And even in such a case, the technique of the present invention can apply to the management of the data read from the external memory and stored in the buffer memory.

Furthermore, the decoder 100 in this embodiment is realized with the technique of the present invention; the data read and used for a motion compensation arithmetic operation for the currently decoding macro block is stored once in the buffer memory and reused for a motion compensation arithmetic operation for the macro block to be decoded after the currently decoding one in the time series. And the present invention can also apply to any decoders as described in the patent document 1. In case of the decoder described in the patent document 1, at the time of decoding the current macro block, the next reference region is predicted and the pixel data of the predicted reference region is read from an external memory and stored in a cache memory. In this case, it is just required to specify an object read region with respect to the predicted reference region.

Furthermore, the decoder 100 in this embodiment reads the pixel data of each object read region larger than the reference region from the external memory 190 for the reasons of the structure of the external memory 190. However, the technique of the present invention can also apply to any decoders, for example, those as described in the patent document 2. In each of those decoders, the pixel data is read from a region that includes the reference region and larger than the reference region intentionally so as to improve the hit rate of the cache memory.

Further, it is noted that, Applicant's intent is to encompass equivalents of all claim elements, even if amended later during prosecution.

## Claims

1. A motion compensation apparatus, comprising:
a buffer memory;
a reading unit which reads a data from an external memory storing a reference image and stores the read data in the buffer memory;
an object read region specifying unit which specifies an object read region including the reference image upon reading a pixel data of a reference region from the external memory so as to make motion compensation with respect to each of macro blocks;
an object read region dividing unit which divides the specified object read region into a plurality of regions; and
a control unit which instructs the reading unit to read the specified object read region and which manages each divided region of the pixel data stored in the buffer memory, the control unit instructing the reading unit to read only a pixel data of a divided region which is not stored in the buffer memory among the plurality of divided regions of the object read region specified by the object read region specifying unit.

2. The motion compensation apparatus according to claim 1, wherein the object read region specifying unit specifies a region including the reference region and being larger than the reference region as an object read region of the reference region.

3. The motion compensation apparatus according to claim 1 or 2, further comprising:
a motion vector decoder which decodes a motion vector of a macro block being decoded,
wherein the object read region specifying unit specifies the object read region corresponding to the reference region denoted by the motion vector.

4. The motion compensation apparatus according to claim 1 or 2, further comprising:
a motion vector decoder which decodes a motion vector of a macro block being decoded; and
a prediction unit which predicts a next reference region of the reference region denoted by the motion vector,
wherein the object read region specifying unit specifies the object read region corresponding to the next reference region.

5. The motion compensation apparatus according to one of claims 1 to 4, wherein the control unit comprises:
a management information holding unit which holds a management information including a head address of the reference image that includes the divided region and a position information denoting a position of the divided region on the reference image with respect to each pixel data of each divided region stored in the buffer memory; and
a read control unit which controls the reading unit according to the management information.

6. The motion compensation apparatus according to claim 5, wherein the management information holding unit holds a size information denoting a size of the divided region as the management information.

7. The motion compensation apparatus according to one of claims 1 to 6, wherein the buffer memory comprises an FIFO (First In First Out) memory.

8. A method of a motion compensation, comprising:
specifying a reference region which is larger than a region of a macro block, based on a motion vector;
specifying an object read region larger than said reference region;
dividing said object read region into a plurality of divided object read regions; and
responding to an identification information identified for each of the divided object read regions to request an external memory to transfer a data in said external memory into a buffer.

9. The method as claimed in claim 8, wherein said responding comprises:
comparing said identification information for each of the divided object read regions with a management information which indicates a data stored in said buffer memory,
wherein when the comparison indicates that there is a data which is not stored in said buffer memory, said data which is not stored in said buffer memory is transferred from said external memory into said buffer memory.

10. The method as claimed in claim 9, wherein said identification information includes a size information of said divided object read region.

11. The method as claimed in claim 9 or 10, wherein said identification information includes a base address on a frame including said divided object read region.

12. A method of a motion compensation, comprising:
specifying a reference region which is larger than a region of a macro block, based on a motion vector;
specifying an object read region larger than said reference region;
dividing said object read region into a plurality of divided object read regions; and
managing a motion compensation based on an identification information identified for each of the divided object read regions and a management information which indicates a data stored in a buffer memory.

13. The method as claimed in one of claims 9 to 12, wherein said identification information includes a position information on a frame including said divided object read region.

14. The method as claimed in claim 12, wherein said managing comprises:
comparing said identification information with said management information; and
transferring a data corresponding to the divided object read region which is not stored in said buffer memory, into said buffer memory from an external memory.

15. A motion compensation apparatus, comprising:
a reference region specifying unit which specifies a reference region which is larger than a region of a macro block, based on a motion vector;
an object read region specifying unit which specifies an object read region larger than said reference region;
an object read region dividing unit which divides said object read region into a plurality of divided object read regions; and
a control unit which manages a motion compensation based on an identification information identified for each of the divided object read regions and a management information which indicates a data stored in a buffer memory.

16. The apparatus as claimed in claim 15, wherein said identification information includes position information on a frame including said divided object read region.

17. The apparatus as claimed in claim 15 or 16, wherein said control unit compares said identification information with said management information, and transfers a data corresponding to the divided object read region which is not stored in said buffer memory, into said buffer memory from an external memory.
